# EUROPEAN PATENT APPLICATION

(11) **EP 0 671 430 A1**
(43) Date of publication of application: **13.09.1995**
(21) Application number: 95300608.7
(22) Date of filing: 31.01.1995
(51) Int. Cl.: C08J 3/07

(54) **Polyester dispersions, method of preparation**

(30) Priority: 07.03.1994 US 207451; 07.11.1994 US 337517
(71) Applicant: MORTON INTERNATIONAL, INC., Chicago, Illinois 60606 (US)
(72) Inventor: Firdosi, Ansar, Woodstock, Illinois 60098 (US)
(74) Representative: Bankes, Stephen Charles Digby

(57) **Abstract**

A physically and hydrolytically stable dispersion of a composition comprising a water-immiscible polyester is prepared by dissolving a composition comprising the water-immiscible polyester in an organic solvent system having a water-miscibility at 25°C of between 0.1 and 50 g/100 ml. to produce a solvent solution, preparing an aqueous solution of between 0.1 and 5 wt.% of a carboxylic acid functional water-miscible polymer having an acid number of at least 700, homogenizing the organic solution with the aqueous solution with sufficient shear force to produce suspended droplets of the organic solution of 20 µm or smaller in an aqueous phase, at least partially neutralizing the carboxyl functionality of the carboxylic acid functional polymer to increase the yield value of the aqueous phase, and stripping the organic solvent to produce an aqueous dispersion of particulates of the polyester composition.

## Description

The present invention is directed to preparing aqueous dispersions of polyesters, which dispersions are physically and hydrolytically stable.

There is a continuing need to provide solutions and dispersions of polymers having low volatile organic contents (VOC). In particular, there is a need to provide aqueous dispersions of water-immiscible polymers.

The present invention is directed generally to producing physically and hydrolytically stable dispersions of water-immiscible polyesters, particularly dispersions of high molecular weight polyester resins.

There are various patents, reports or publications describing how polyesters, particularly low molecular weight (1500-15000 Mw) polyester resins can be prepared in co-solvent and water. These polyesters are usually acidic, typically containing carboxyl groups that are built into the polymer chain pendent or at the terminal ends. These polyesters thus require a neutralization process using a base; for example ammonia, sodium hydroxide, sodium carbonate, ammonium carbonate, amines, etc. These carboxyl functional polymers, when neutralized, produce ammonium or sodium salts (depending on the neutralising agent used) of the polymer, which is then water reducible.

The major disadvantages associated with these water reducible polyesters are their poor hydrolytic stability. The ester group, which is the linkage group in the polymer backbone, is very susceptible to hydrolysis. The base promotes hydrolysis of esters by providing the strongly nucleophilic reagent OH⁻. The reaction is essentially irreversible because carboxylate anion shows little tendency to react with the alcohol produced. 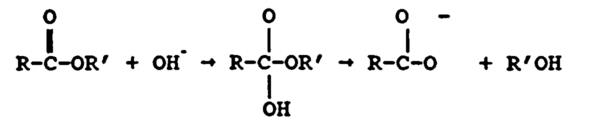
The hydroxide attack at the carbonyl carbon results in a cleavage of the bond between oxygen and the acyl group. The hydrolysis reaction is catalyzed by both an acid and a base and will proceed slowly at room temperature; the result of which is a polymer chain breakdown into lower molecular weight species and thus very poor performance of the final coating or an adhesive.

### Summary of the Invention:

In accordance with the present invention there is provided a method of preparing stable aqueous dispersions of compositions comprising water-immiscible polyesters, particularly high molecular weight polyesters. The invention is also directed to the physically and hydrolytically stable polymer dispersions produced by the method. The dispersion is prepared by first preparing separately solutions a) and b):
a) an aqueous solution containing between about 0.1 and about 5.0 wt.% of a carboxylic acid group-containing polymer having an acid number of at least about 700, and
b) a solution of a composition comprising a water-immiscible polyester, preferably having an acid number of 0 to about 10, in an organic solvent or an organic solvent mixture having a solubility in water of between about 0.1 and about 100 g/100 ml at 25°C;
homogenizing solution b) with solution a) using sufficient shear force to produce an emulsion of suspended droplets of solution b) of about 20 microns or less in phase of aqueous solution a);
neutralizing the carboxylic acid group-containing polymer in water to increase the yield value of the aqueous phase sufficiently so that the aqueous phase will stably suspend particulates of the polyester composition after subsequent solvent removal, and
stripping solvent from the emulsion to yield a dispersion of particulates of the polyester composition in aqueous solution.

### Detailed Description of Certain Preferred Embodiments

In order to produce aqueous dispersions of water-immiscible polyester compositions that are permanent, i.e., physically stable to settling, it is necessary that the aqueous phase have sufficient yield value. That is, the yield value of the aqueous phase must exceed the force of gravity on suspended particulates of the polyester composition. Yield value is initial resistance to flow under applied stress. The requisite yield value of the aqueous phase to stabilize a dispersion of particulates of water-immiscible polyester composition depends upon several factors. However, generally, it is necessary to provide an aqueous phase yield value of at least about 5 gm./cm.·sec².

Aqueous phase yield values are achieved herein by dissolving in the aqueous phase between about 0.1 and about 5.0 wt%, relative to the weight of water (100 wt%) of a water-miscible, carboxylic acid-functional polymer which has an acid number of at least about 700, and, after homogenising a polyester composition-containing solvent phase therewith, neutralizing the carboxylic acid-functional polymer sufficiently to attain the desired yield value, i.e., sufficient to provide a permanent (physically stable) dispersion of polyester composition particulates after solvent removal.

Hydrolytic stability is best provided using a carboxylic acid-functional polymer having a high molecular weight, i.e., weight average molecular weight (Mw), of at least about 2,000,000. Particular suitable polymers for this purpose are high molecular poly(acrylic acid)s, particularly those having weight average molecular weights (Mw) of about 1,250,000 and preferably at least about 2,000,000 or above. Such poly(acrylic acid)s are sold, for example, by B.F. Goodrich as Carbopol® polymers. Likewise, poly(methacrylic acid) could be used, as could copolymers of α,β-ethylenically unsaturated carboxylic acid functional monomers, e.g., acrylic acid or methacrylic acid, or α,β-ethylenically anhydride-functional monomers, e.g., maleic anhydride, with other α,β-ethylenically unsaturated monomers. The exact amount of the high molecular weight, water-miscible, carboxylic acid functional polymer and the degree of final neutralization is adjusted to achieve the requisite yield value according to the particular polymer, solvent(s) and particulate size. While the high molecular weight, water-miscible, carboxylic acid-functional polymer increases the yield value substantially, its use at levels of 5 wt% or less does not substantially increase the viscosity of the aqueous phase prior to neutralization. Subsequently, however, when the carboxylic acid-functional polymer is neutralized, the viscosity as well as the yield value of the aqueous phase increases.

Because neutralization of the carboxylic acid-functional polymer increases the viscosity of the aqueous phase, the aqueous solution of the carboxylic acid-functional polymer and the organic solvent solution of the polyester are homogenized prior to neutralization of the acid functional polymer. Otherwise, extremely high shear forces would be required to homogenize the two solutions, which shear force would result in mechanical cleavage of the polyacrylic acid chain and thus reduce the yield value.

The aqueous phase optionally, but preferably, also includes a surfactant at a level up to about 1 wt.% relative to water, preferably between about 0.1 to about 1 wt.%. The surfactant aids initially in wetting the polyester composition dispersion to the substrates to which it is applied. Preferred surfactants are non-ionic surfactants, such as Surfynol® 400 series.

It is to be noted that the use of surfactants is not to aid in dispersion of polymer particles within the aqueous phase. The amount used is extremely small and is insufficient to significantly help in dispersing the polymer particles.

Because of the carboxylic functionality of the aqueous phase polymer, the aqueous phase is initially acidic. Subsequent to homogenization of the aqueous and solvent-based solutions, a base, such as ammonium hydroxide, amine, sodium carbonate etc., is added for the purpose of increasing the yield value. Typically, the carboxyl functionality of the polymer is neutralized to at least about 20%, preferably to at least about 80%, and up to 100%. The neutralizing base may be added in slight excess of the carboxyl functionality of the polymer, but preferably the pH is maintained in a neutral range to optimize hydrolytic stability. The pH of the aqueous phase after neutralization should be between about 5 and 8, particularly for hydrolytically susceptible polyesters, and preferably in the 7-8 range. Most preferably, the pH is close to 7.

The polyester composition is first dissolved in a solvent system comprising an organic solvent or solvents to produce the water-immiscible polymer solution b). The total solubility in water at 25°C of the solvent or solvent system is between about 0.1 and about 50 g/100ml. The solvent system must be substantially water-immiscible so as to form a two-phase system; however, some water-miscibility is necessary for the solvent phase to wet out the polymer droplets and thereby facilitate dispersion. If the solvent system is too water-miscible, the droplets will fuse during stripping of the solvent.

The solvent(s) must be stripable from water. Solvents having boiling points lower than water are readily stripable from water. However, even solvents having boiling points higher than water, such as toluene, are stripable under vacuum as an azeotrope with water-replacement to the emulsion.

The solvent system may be a single solvent, such as methylethylketone (MEK), having the requisite solubility. However, it is preferred to utilize a mixture of a water-immiscible solvent, i.e., having a water miscibility at 25°C of less than 0.1 g/100 ml., and a completely water-miscible solvent. In such a mixture, the water-miscible solvent generally comprises between 2 and about 50 wt% of the solvent system and the water-immiscible solvent between about 50 and about 98 wt%. Typically, the water-immiscible solvent is at about an 80 wt% level, balance water-miscible solvent. Too much water-miscible solvent will tend to make the dispersion too viscous and unstable due to droplet fusion.

Suitable water-miscible solvents include 1,3-dioxolane and its 2 and 4 methyl derivatives, isopropyl alcohol, methanol, ethanol, and various acetate esters. Suitable water-immiscible solvents include toluene and methylene chloride. A preferred solvent system is a mixture of 1,3-dioxolane (B.P. 30°C) plus toluene (B.P. 111°C) and/or methylene chloride (B.P. 40.1°C).

The water-immiscible polyester, either alone or in a composition containing up to about an equal amount by weight of other components, are dissolved in the solvent system, typically at between about 15 and about 45 wt.% solids.

The aqueous and solvent phases are then mixed in appropriate proportions, typically between about 40/60 and about 60/40 V/V.

The solvent phase is then homogenized with the aqueous phase to produce an emulsion of droplets of the solvent phase within the aqueous phase. The droplets must be of sufficiently small size to be stably supported by the aqueous phase. Droplets up to about 20 microns may be stably suspended; however, smaller droplets are preferred because the resulting smaller particulates produce smoother coatings and fuse better upon drying. Preferably droplet size is below about five microns, and most preferably, droplet size is between about 0.5 and about 1.0 micron.

As one method of homogenizing the solvent phase in the aqueous phase, a pre-emulsion is first prepared in a blade mixer such as a Hockmeyer blade mixer. This produces an unstable emulsion in which the solvent phase droplets are about 200 microns or below. Next, the pre-emulsion is homogenized in an homogenizer, such as a Gaulin homogenizer in which the pre-emulsion is forced through a piston orifice against a steel plate at between about 1000 and about 7000 (typically about 5000) psi. This produces droplets which are about 0.5 to about 4 microns in size.

Alternatively, the homogenization may be done by ultrasonification process, where the liquid is passed through an elliptically shaped orifice. The resultant jet of high velocity fluid infringes on a thin edge blade which vibrates in the ultrasonic range. This produces droplets which are about 0.5 to 10 microns in size.

To convert the emulsion to a dispersion of the polyester composition, the solvent is stripped. Stripping is preferably done at about or below room temperature, i.e., about 25°C or below. To efficiently strip at such low temperatures, high vacuum is used, e.g., between about 25 and about 30 inches of mercury. During stripping, some water may be removed with the solvent, and, in some cases, it is desirable to add make-up water during stripping. Stripping is carried out until substantially all solvent is removed. A milky dispersion is the result. Final solvent levels of less than 25 ppm may be achieved. The dispersed particles of immiscible polyester-containing composition are typically somewhat smaller than the solvent-containing droplets from which they are derived, i.e., about 4 microns or smaller, preferably about 1 micron or smaller.

The final solids level of the dispersion may be adjusted by addition of water or removal of water, e.g., by continuing the vacuum stripping. Typically the final solids level is between about 10 and about 30 wt%. The water-miscible polymer is typically present at between about 0.1 and about 1.0 wt % relative to the polyester composition (100 wt%) (calculated based on the weight of the water-miscible polymer prior to neutralization).

As noted above, this invention is particularly advantageous in dispersing polyesters which may have low acid numbers, i.e., below about 10 and preferably 0 or close thereto. Such polyesters are hydrolytically stable relative to polyesters having higher acid numbers. Any molecular weight water-immiscible polyester may be dispersed by the method of the present invention. Typically polyesters useful in accordance with the present invention have weight average molecular weights (Mw) of between about 15,000 and about 200,000. Particular advantages of the invention are achieved by dispersing polyesters having weight average molecular weights of between about 40,000 and about 80,000 that are useful in heat-sealable coatings.

The dispersions which are produced are both physically stable against settling and are hydrolytically stable. By physically stable is meant that no settling occurs during a six month storage at 25°C. Hydrolytic instability would be evidenced by increased acidity of the dispersion as cleavage of polyester bonds increase the acid number of the polyester. By hydrolytically stable is meant a dispersion which does not decrease in pH more than 1.0 during a six month storage at 25°C.

It is discovered that when high molecular weight polymers are dispersed by the method of the present invention, the dispersions display excellent hydrolytic stability. This property of hydrolytic stability in polyesters, i.e., lack of polymer chain breakdown, were measured at room temperature and at 50°C by measuring acid values of polyesters over periods in excess of six months. In general, as it is known, high molecular weight polyesters dispersed in water show very poor hydrolytic stability.

Straight polyesters dispersions may be produced having some adhesive properties. However, typical adhesive compositions contain additional components. Heat-sealable thermoplastic polyester adhesive compositions typically include tackifying resins, waxes and some fillers. Laminating adhesives may include, in addition to polyester resin, water-dispersed isocyanate, melamine and/or epoxies. Polyester compositions used for dispersions in accordance with the invention have between 50 wt% and 100 wt% of a polyester resin or resins. Generally, all components of a polyester-based composition are co-dissolved along with the polyester in the solvent system and remain with the polyester throughout formation of the dispersion in the process of the present invention.

Polyester adhesives according to the invention have a number of packaging applications. For example, aluminum foil may be laminated to paper using polyester-based adhesives prepared in accordance with the present invention. The adhesive dispersion is applied by a Gravure method to the aluminum foil and then the dispersion is dried at above 100°C. Subsequently, the paper layer is adhered thereto or polyester adhesives are applied on polyester films and subsequently heat-sealed to polyethylene terephthalate trays for food packaging application.

The invention will now be described in greater detail by way of greater examples.

### EXAMPLE 1

A high molecular weight polyester heat seal composition in water consists of approximately parts by weight (PBW) of the following.

| | |
|---|---|
| a) polyester resin (60-70M Mw) | 13.0 |
| b) polyester resin (40-50M Mw) | 7.7 |
| c) oleamide | 0.6 |
| d) resin ester | 0.7 |
| e) toluene | 58.0 |
| f) 1,3 dioxolane | 20.0 |

The above composition is prepared by heating to 50°C under pressure for three hours. The batch is then cooled to 23°C and filtered through 10 micron filter.

A separate composition of water, consisting of the following:

| | |
|---|---|
| a) deionized water | 99.58 pbw |
| b) polyacrylic acid | 0.16 pbw |
| c) Surfynol® surfactant | 0.26 pbw |

The polyacrylic acid is added to the water first and then when completely dissolved, surfactant is added.

The water phase is added to stainless steel vessel that is large enough to hold both phases and leave enough space for high shear mixing. The Hockmeyer® speed is gradually increased to 4000 rpm and then polyester solution heat seal is added at the rate of 3.0 - 3.5 gal/min on a 500 gal batch (but slower on smaller batches). When all polyester solution heat seal is added, the Hockmeyer® speed is turned down to 2200 rpm. This pre-emulsion thus prepared is immediately pumped into a Gaulin® homogenizer running at 5500 to 6000 psi.

When the batch is completely homogenized, 25 gms/100 lbs of 28% ammonium hydroxide and 50 gms/100 lbs of ammonium carbonate is added to increase the yield value of the water phase so it can support the polymer solution droplets. This emulsion is then transferred into vacuum stripping tank and the solvent are stripped over a period of eight hours or less. During stripping process, additional DI water is pumped in the vessel to replace the lost solvents. The NVM of the coating is increased by stripping excess water toward the end of the process.

### EXAMPLE 2

A high molecular weight polyester resin (60-70M Mw) solution at 25% NVM is prepared in solvent blend of toluene and 1,3 dioxolane at 80:20 ratio.

A separate composition of water, consisting of the following (pbw):

| | |
|---|---|
| DI water | 99.58 |
| polyacrylic acid | 0.16 |
| Surfynol® surfactant | 0.26 |

The polyacrylic acid is added to the water first and then when completely dissolved, the surfactant is added.

The water phased is added to stainless steel vessel large enough to hold both phases and leaving enough space for high shear mixing.

The rest of the process is the same as described in Example 1.

### EXAMPLE 3

A high molecular weight polyester resin (70-80M Mw) solution is prepared at 15% NVM in 1,3 dioxolane and toluene at 50:50 ratio.

The rest of the process was the same as described in Example 1.

### EXAMPLE 4

A solution of a high molecular weight crystalline polyester, which is usually not soluble in solvents such as Methylethylketone (MEK), toluene, ethylacetate, but is soluble in combination of two or more other solvents, was prepared as follows:

| | PBW |
|---|---|
| a) Crystalline high molecular wt polyester | 16.0 |
| b) Methylene chloride | 50.4 |
| c) 1,3-Dioxolane | 16.8 |
| d) Toluene | 16.8. |

The above composition was prepared by heating under nitrogen blanket until the solvent blend came to boiling. The equipment was fitted with a condenser so that there was no loss of solvents.

A separate composition was prepared as follows:

| | PBW |
|---|---|
| a) Deionized water | 99.58 |
| b) Polyacrylic Acid | 0.16 |
| c) Surfactant | 0.26 |

The rest of the process was the same as described in Example 1.

## Claims

1. A method of forming a hydrolytically stable dispersion of a composition comprising between 50 wt% and 100% of a water-immiscible polyester, the method comprising the steps of:
preparing a first separate solution of said polyester composition in a solvent system having a miscibility in water of between 0.1 and 50 g/100 ml. at 25°C,
also preparing a second separate aqueous solution of between 0.1 and 5.0 wt.% of a carboxylic acid functional, water-miscible polymer having an acid number of at least 700, the amount of said water-miscible polymer, upon subsequent neutralization of between 20 and 100% of its carboxylic acid functionality, being sufficient to provide said aqueous solution with a yield value sufficient to stably support particulates of said polyester composition of 4 µm or smaller,
homogenizing said first solution and said second aqueous solution to produce droplets of said first solution in said second solution, said droplets being 20 µm or smaller, and
stripping said solvent system from said emulsion to produce particulates of said polyester composition dispersed in said second solution.

2. A method according to Claim 1 wherein said solvent system comprises between 2 and 50 wt.% of a solvent completely miscible with water and between 50 and 98 wt.% of a solvent having a water miscibility of 10 g/100ml. at 25°C or less.

3. A method according to Claim 1 or Claim 2 wherein said polyester has an acid number of 10 or below.

4. A method according to any preceding claim wherein said solvent system is a mixture of 1,3-dioxolane plus toluene and/or methylene chloride.

5. A method according to any preceding claim wherein said stripping is effected at 25°C or below.

6. A method according to Claim 5 wherein said stripping is effected under vacuum of 38.1 cm (15 inches) of mercury or higher vacuum.

7. A method according to any preceding claim wherein said water-miscible polymer is poly(acrylic acid).

8. A method according to Claim 7 wherein said poly(acrylic acid) has a weight average molecular weight of at least 1,250,000.

9. A physically and hydrolytically stable dispersion of a composition comprising between 50 wt.% and 100% of water-immiscible polyester, said composition being in the form of particulates of 4 µm size or smaller dispersed in an aqueous solution of a carboxylic acid functional polymer having an acid number of at least 700 and its carboxylic acid functionality being neutralized to between 20% and 100%, said neutralized or partially neutralized carboxylic acid functional polymer being present in sufficient amount to provide a yield value that supports said dispersed particulates.

10. A dispersion according to Claim 9 which has a pH of between 5 and 8.

11. A dispersion according to Claim 10 which has a pH of between 7 and 8.

12. A dispersion according to any one of Claims 9 to 11 wherein said carboxylic acid functional polymer is poly(acrylic acid).

13. A dispersion according to any one of Claims 9 to 12 wherein said carboxylic acid functional polymer has a weight average molecular weight of at least 1,250,000.
